# EUROPÄISCHE PATENTSCHRIFT

(11) **EP 1 396 384 B1**
(45) Veröffentlichungstag und Bekanntmachung des Hinweises auf die Patenterteilung: **03.09.2008**
(21) Anmeldenummer: 03016484.2
(22) Anmeldetag: 22.07.2003
(51) Int. Cl.: B60R 7/08, B60P 7/08

(54) **Befestigungssystem für Zubehörteile**
System for mounting accesories
Système pour fixer des accessoires

(30) Priorität: 07.08.2002 DE 10236077
(43) Veröffentlichungstag der Anmeldung: 10.03.2004
(60) Teilanmeldung: 06005585.2
(73) Patentinhaber: ADAM OPEL AG, 65423 Rüsselsheim (DE)
(72) Erfinder: Steinbach, Markus, 55234 Wahlheim (DE); Ziegler, Hendrik, 64347 Griesheim (DE)

(56) Entgegenhaltungen:
- EP-A- 1 216 884
- DE-B- 1 004 104
- US-A- 2 589 922
- US-A- 4 992 015
- US-A- 5 236 153
- US-A- 5 249 722
- US-A- 5 533 848

## Beschreibung

Erfindungsgegenstand ist ein Befestigungssystem zur Befestigung eines Zubehörteils in einem Kraftfahrzeug, mit einer am Kraftfahrzeug montierten Trägerschiene und einem mit dem Zubehörteil verbundenen Befestigungskopf.

Die deutsche Offenlegung DE 100 47 542 A1 offenbart einen Laderaum für ein Kraftfahrzeug mit mehreren längs und quer verlaufenden Schienen, die in Seitenverkleidungen des Laderaumes zumindest teilweise räumlich integriert sind. Diese Schienen übernehmen Befestigungs- oder Haltefunktionen für im Laderaum positionierte Funktionsteile, die an den Schienen befestigt sind. Die Schienen können dazu mit Befestigungsrastern, mit Stütz- oder Auflagefunktionen versehen sein und liegen an gegenüberliegenden Seitenverkleidungen des Laderaumes paarweise gegenüber. Bei den Funktionsteilen handelt es sich um horizontale Decklagen oder um vertikale Funktionsteile wie Trenn- oder Sicherungsgitter oder -netze, die steife Rahmenelemente aufweisen, deren Enden in sich jeweils paarweise gegenüberliegende Schienen eingreifen. Eine variable Befestigung eines Funktionsteils an nur einer Schiene ist nicht vorgesehen.

In die Schienen können zwar Haken integriert sein, die die Aufhängung von Gegenständen an nur einer Schiene erlauben; diese sind jedoch an den Schienen nicht frei platzierbar.

In der DE 199 41 714 C2 ist eine Haltevorrichtung in einem Kraftfahrzeug mit einer am Kraftfahrzeug montierten Trägerschiene (1) und einem mit dem Zubehörteil verbundenen Befestigungskopf beschrieben, bei der ein Band an seinen Enden Haken aufweist, die durch Einhängen in jeweils eine schlitzartige Ausnehmung einer Profilschiene lösbar mit zwei gegenüberliegenden Profilschienen verbunden sind. Auch bei dieser Ausgestaltung der Befestigungsanordnung sind für das Zustandekommen einer sicheren Befestigung zwei Profilschienen notwendig. Zudem bedarf es einer Zugkraft des Bandes, mit der das Band auf die Profilschienen wirkt. Neben der Notwendigkeit zweier Profilschienen eignet sich eine solche Befestigungsanordnung außerdem nicht für zu befestigende Gegenstände, die eine derartige Zugkraft nicht ausüben können.

Eine Haltevorrichtung nach dem Oberbegriff des Anspruchs 1 ist aus US 4 992 015 A bekannt. Der Befestigungsknopf ist an der Schiene mit Hilfe einer Schraube feststellbar, die in eine Gewindebohrung des Befestigungskopfes eingreift und eine Öse trägt, an der ein Zubehörteil befestigbar ist. Die Spitze der Schraube dreht sich beim Feststellen und Lösen in Kontakt mit der Schiene und neigt dazu, an der Schiene Spuren zu hinterlassen, die nach längerer Benutzung die Schiene unansehnlich werden lassen. Außerdem ist das Feststellen und Lösen der Schraube durch Drehen langwierig.

Aus EP 1 216 884 A2 ist eine Haltevorrichtung mit einer Schiene und einem Befestigungskopf bekannt, bei der von zwei an der Schiene angreifenden Klauen des Befestigungskopfes eine erste gegen eine Feder verschiebbar ist. Der Kopf wird befestigt, indem zunächst die zweite Feder an der Schiene eingehakt wird und dann der Kopf gegen die Schiene gedrückt wird, wobei die erste Klaue an der Schiene schleifend ausweicht, um dann hinter der Schiene einzuschnappen.

Aufgabe der vorliegenden Erfindung ist es daher, ein Befestigungssystem vorzustellen, mit dem Gegenstände lösbar, bequem und fest befestigt werden können und das wenig zur Bildung von Gebrauchsspuren neigt.

Gelöst wird die Aufgabe durch eine Befestigungsanordnung mit den Merkmalen des Anspruchs 1.

Mit der erfindungsgemäßen Befestigungsanordnung können beliebige und verschiedenste Funktionsteile wie z. B. Getränkehalter, Abdecknetze, elektrische Anschlussdosen oder Haken für Transportgegenstände und ähnliches in einem Fahrzeuginnenraum befestigt werden, ohne dass ein gleichzeitiger Eingriff in zwei gegenüberliegende Schienen erforderlich wäre.

Erfindungsgemäß sind die zwei Halteklauen mittels einer Führungsschiene des Haltekopfs gegeneinander verschiebbar. Es können dabei beide Halteklauen bezüglich des Haltekopfes verschiebbar ausgeführt sein, es kann aber auch nur eine der beiden Halteklauen verschiebbar ausgeführt sein, während die andere Halteklaue fest mit dem Haltekopf verbunden ist.

Vorteilhafterweise ist eine erste Feder vorhanden, die die Halteklauen in eine Klemmposition an der Trägerschiene beaufschlagt. Eine solche Feder bewirkt beim Montieren des Befestigungskopfes an der Schiene ein selbsttätiges Schließen der Klauen und damit eine zumindest provisorische Verankerung des Befestigungskopfes an der Trägerschiene. Dabei ist die Kraft der Feder vorzugsweise so bemessen, dass sie eine Längsverschiebung des Befestigungskopfes an der Schiene nicht verhindert. Um den Befestigungskopf in Längsrichtung der Schiene zu fixieren, sind vorzugsweise zusätzliche Spannmittel vorgesehen.

Eine bevorzugte Weiterbildung der oben beschriebenen Ausgestaltungen der Erfindung weist einen oder zwei offene elektrische Leiter auf, die sich jeweils an einer vom Befestigungskopf abgewandten Seite der Rippen entlang der Trägerschiene erstrecken. Eine solche Weiterbildung ist dann von Vorteil, wenn mit dem Befestigungssystem elektrisch betriebene Zubehörteile befestigt werden sollen. Dabei kann bei einer Ausführungsform dieser Weiterbildung nur ein Leiter vorgesehen sein, während die Trägerschiene selber den zweiten Leiter darstellt.

Vorzugsweise ist dabei der wenigstens eine elektrische Leiter durch eine elastische Schicht von der Trägerschiene beabstandet. Bei der elastischen Schicht handelt es sich vorzugsweise um ein Elastomer, insbesondere um Weichgummi oder Moosgummi.

Zwischen dem Leiter und der elastischen Schicht ist vorzugsweise eine starre Stützschicht vorgesehen. Diese kann beispielsweise aus Kunststoff bestehen und besitzt zum einen die Aufgabe den Leiter elektrisch zu isolieren, zu positionieren sowie eventuelle punktuelle Belastungen des Leiters durch die Halteklauen auf einer größeren Fläche der darunter liegenden elastischen Schicht zu verteilen und so einer übermäßigen Verformung des Leiters vorzubeugen.

Dabei haben die Halteklauen bevorzugt zur Abnahme eines Stromes von dem oder den Leitern wenigstens einen gegenüber dem Befestigungskopf isolierten Kontakt.

Zum Berühren des wenigstens ersten Leiters steht der Kontakt vorteilhaft aus einer Kontur der jeweiligen Halteklauen hervor. Dadurch ist gewährleistet, dass nur der Kontakt und kein anderes Teil der Halteklaue den Strom führenden Leiter berühren kann. Eine Kontaktierung zwischen den Halteklauen und dem elektrischen Leiter der Trägerschiene erfolgt sofort mit dem Befestigen der Halteklauen an der Trägerschiene.

Aus Sicherheitsgründen können Mittel zum Schließen eines Stromkreises erst nach erfolgter Befestigung des Befestigungskopfes an der Trägerschiene vorgesehen sein.

Die Erfindung wird im Folgenden unter Bezugnahme auf Zeichnungen näher erläutert. Es zeigen:
- Fig. 1: einen Querschnitt durch eine Trägerschiene;
- Fig. 2: eine Ausführung eines Befestigungskopfes gemäß einer Ausgestaltung der Erfindung; und
- Fig. 3: eine Ausführung eines Befestigungskopfes gemäß einer anderen Ausgestaltung der Erfindung.

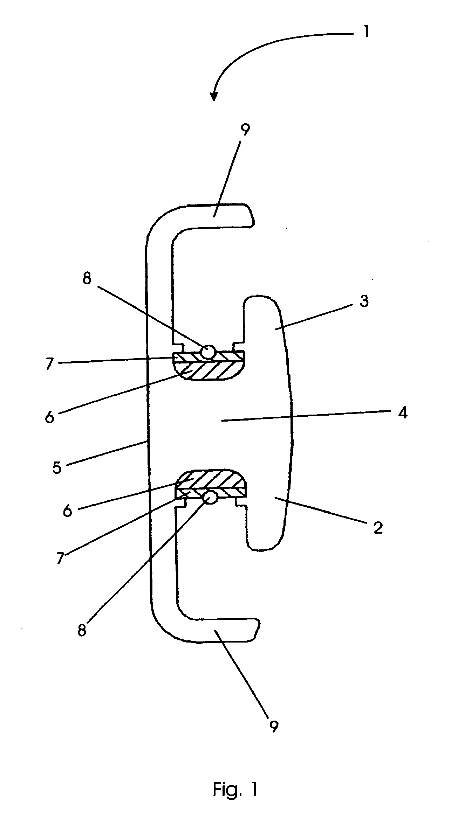

Ein Querschnitt durch eine an einem Kraftfahrzeug montierte Trägerschiene 1 ist in Fig. 1 gezeigt. Die Trägerschiene 1 verfügt über zwei von einem mittigen Steg 4 in entgegengesetzte Richtungen abstehende Rippen 2, 3. In der Darstellung der Fig. 1 weist die Rippe 2 nach unten, während die Rippe 3 nach oben gerichtet ist. Die Rippen 2, 3 gehen senkrecht von einem Ende eines Stegs 4 aus, der mit einem entgegengesetzten Ende senkrecht und mittig auf einem Bodenteil 5 mündet. Das Bodenteil 5 reicht in den Richtungen der Rippen 2, 3 über diese hinaus. Sowohl zwischen der Rippe 2 und dem Bodenteil 5 als auch zwischen der Rippe 3 und dem Bodenteil 5 wird auf diese Weise eine Hinterschneidung gebildet. In diesen Hinterschneidungen ist eine Stromversorgung bestehend aus einem Elastomerstreifen 6, einem Kunststoffstreifen 7 und einem elektrischen Leiter 8 eingelegt. Die elektrische Stromversorgung wird weiter unten näher beschrieben. Zum Schutz der Stromversorgung sind Endabschnitte 9 des Bodenteils 5 zur Seite mit den Rippen 2, 3 hin abgebogen. An dem Trägerteil 1 wird ein Zubehörteil mit einem daran verbundenen Befestigungskopf befestigt, indem die abstehenden Rippen 2 und 3 von Halteklauen des Befestigungskopfes umfasst werden.

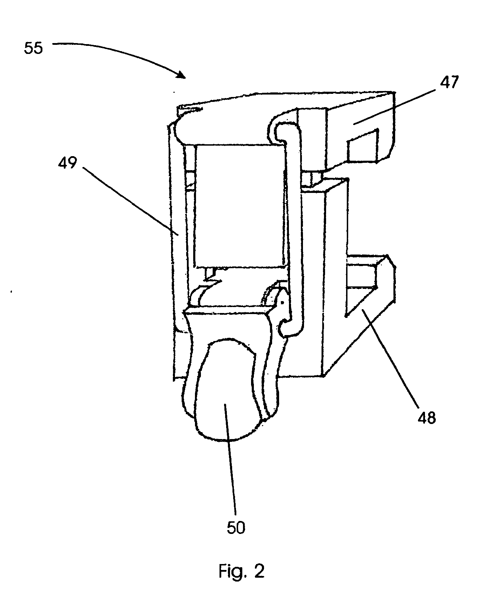

Fig. 2 zeigt eine Ausgestaltung eines erfindungsgemäßen Befestigungskopfes 55. Zu sehen sind eine Halteklaue 47, die mit der Rippe 3 verhakt, und eine Halteklaue 48, die mit der Rippe 2 der Trägerschiene 1 verhakt. Die Halteklauen 47 und 48 sind gegeneinander schienengeführt verschiebbar. Dabei ist der Verschiebeweg der Halteklauen 48 durch einen Splint als Endanschlag begrenzt, der in der Fig. nicht sichtbar ist. Durch den Endanschlag wird eine maximale Öffnungsweite der Halteklauen vordefiniert. Außerdem verhindert er ein Auseinanderfallen der beiden Halteklauen im von der Trägerschiene 1 gelösten Zustand. Bei der gezeigten Ausführung handelt es sich um eine U- oder vorzugsweise Schwalbenschwanz-Schienenführung.

Ein Spannbügel 49 ist an der Halteklaue 47 angelenkt. Ein Kniehebel 50 ist einerseits am Spannbügel 49, andererseits an der Halteklaue 48 angelenkt. Wenn der Kniehebel 50 gelöst ist, lassen sich die beiden Halteklauen 47 und 48 gegeneinander verschieben und der Befestigungskopf 55 lässt sich an der Trägerschiene 1 einhaken. Durch Schließen des Kniehebels 50 werden die Halteklauen 47 und 48 zusammengezogen und so mit den Rippen 2 und 3 verklemmt, so dass der Befestigungskopf 55 fest an der Trägerschiene 1 sitzt. Zum Lösen des Befestigungskopfes 55 wird bei dieser Ausführung der Kniehebel 50 geöffnet, wodurch sich die Verklemmung der beiden Halteklauen 47 und 48 löst und die Halteklaue 48 gegenüber der Halteklaue 47 verschoben werden kann, wodurch sich der Befestigungskopf 55 von der Trägerschiene 1 lösen lässt.

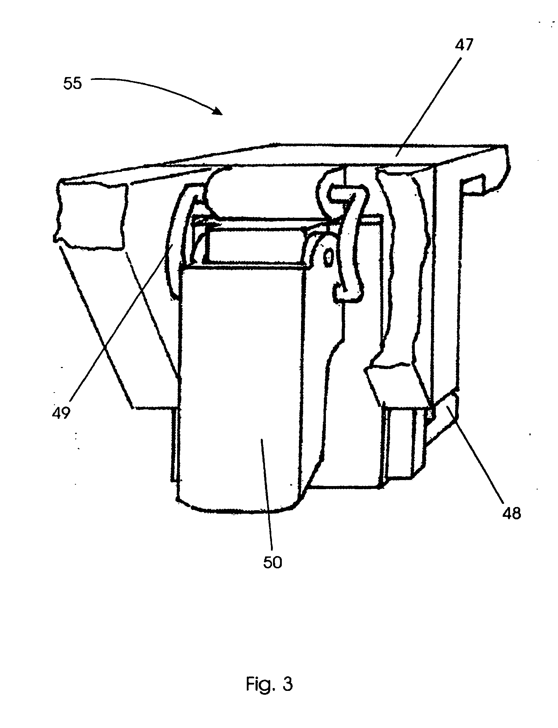

Die in Fig. 3 gezeigte Ausgestaltung gleicht in Aufbau und Funktion weitgehend der Ausgestaltung von Fig. 2, weswegen zur Bezeichnung ihrer Komponenten gleiche Bezugszeichen wie in Fig. 2 verwendet werden. Der wesentliche Unterschied zwischen den zwei Ausgestaltungen ist die gekrümmte Form des Spannbügels 49 in Fig. 3, der im festgeklemmten Zustand elastisch gestreckt ist und so als eine kräftige Feder wirkt, die trotz eventuell streuender Abmessungen der Trägerschiene 1 und des Befestigungskopfes 55 einen festen Halt ermöglicht.

Mit dem erfindungsgemäßen Befestigungssystem lässt sich auf einfache und praktische Weise eine Stromversorgung für die Zubehörteile bewerkstelligen. Dies ist in Fig. 1 gezeigt. Darin ist zu sehen, dass zwischen der Rippe 2 und dem Bodenteil 5 sowie zwischen der Rippe 3 und dem Bodenteil 5 jeweils ein offener elektrischer Leiter 8 vorgesehen ist, der sich entlang der Trägerschiene 1 erstreckt. Dabei stellt der Leiter 8 hinter der Rippe 3 eine elektrische Masse dar, während der Leiter 8 hinter der Rippe 2 einen positiven elektrischen Pol darstellt. Durch die Anordnung des Spannung führenden Leiters in einer nach unten offenen Hinterschneidung wird ein Kurzschluss durch Fremdkörper oder Verunreinigungen weitestgehend ausgeschlossen.

Die Leiter 8 liegen dabei auf einer Grundschicht 6 auf, die aus einem Elastomer besteht. Bei der Grundschicht 6 handelt es sich vorzugsweise um Weichgummi oder Moosgummi. Zwischen der Grundschicht 6 und dem Leiter 8 befindet sich ein Streifen 7 aus einem steifen Kunststoff, in den der Leiter 8 zum Teil eingebettet ist. Durch den Streifen 7 ist der Leiter 8 zum einen elektrisch isoliert, zum anderen wird er durch ihn an einer vorgesehenen Stelle positioniert. Außerdem lassen sich durch den Kunststoff 7 eventuelle punktuelle Verformungen des Leiters 8 bei der Kontaktierung auf einer größeren Fläche verteilen.

Die Kontaktierung erfolgt dabei über die Halteklauen 47, 48, die zur Abnahme eines Stromes von den Leitern 8 über isolierte Kontakte verfügen, die gegenüber dem Befestigungskopf 55 isoliert sind. Diese Kontakte stehen dabei aus den Halteklauen 47, 48 hervor, um eine Kontaktierung mit dem Leiter 8 wirksam sicherzustellen. Da es während der Befestigung des Befestigungskopfes 55 an der Trägerschiene 1 zum Überspringen von Funken kommen kann, ist aus Sicherheitsgründen ein Schalter vorhanden, der einen Stromkreis mit dem Zubehörteil während des Befestigungsvorganges unterbindet und erst nach erfolgter Befestigung und Kontaktierung den Stromkreis schließt.

Ein solcher Schalter, der auf Seiten des Befestigungskopfes bzw. des Zubehörteils vorgesehen ist, kann manuell betätigbar sein, oder er kann mit einer vorgegebenen Verzögerung nach Erscheinen der Versorgungsspannung an seinen Eingangsklemmen automatisch schließen.

Alternativ kann ein solcher Schalter auch zwischen die Leiter 8 und eine sie versorgende Batterie des Kraftfahrzeugs eingefügt sein. Ein automatischer Schalter dieser Art kann z.B. den Stromfluss über die Leiter 8 überwachen und die Spannung zwischen den Leitern 8 auf einen niedrigen Wert und/oder einen hohen Innenwiderstand regeln, wenn der Stromfluss nahe Null ist, und mit einer Verzögerung die Spannung auf die Batterienennspannung hoch oder den Innenwiderstand hinunterregeln, sobald auf einen angeschlossenen Verbraucher hinweisender Stromfluss durch die Leiter 8 erfasst wird.

### Bezugszeichenliste

- 1.: Trägerschiene
- 2.: Rippe
- 3.: Rippe
- 4.: Steg
- 5.: Bodenteil
- 6.: Elastomer
- 7.: Kunststoff
- 8.: elektrischer Leiter
- 9.: Endabschnitt
- 47.: Halteklaue
- 48.: Halteklaue
- 49.: Spannbügel
- 50.: Kniehebel
- 55.: Befestigungskopf

## Patentansprüche

1. Befestigungssystem zur Befestigung eines Zubehörteils (11) in einem Kraftfahrzeug, mit einer am Kraftfahrzeug montierten Trägerschiene (1) und einem mit dem Zubehörteil (11) verbundenen Befestigungskopf (55), wobei die Trägerschiene (1) in zwei entgegengesetzten Richtungen abstehende Rippen (2; 3) trägt und der Befestigungskopf (55) zwei die Rippen umgreifende Halteklauen (47; 48;) aufweist **dadurch gekennzeichnet, dass** die zwei Halteklauen (47; 48) mittels einer Führungsschiene des Befestigungskopfs (55) gegeneinander verschiebbar sind und dass ein Spannbügel (49) einerseits an die erste Halteklaue (47), andererseits über einen Kniehebel (50) an die zweite Halteklaue (48) angelenkt ist.

2. Befestigungssystem nach Anspruch 1, **gekennzeichnet durch** eine erste Feder (49), die die Halteklauen (47, 48) in eine Klemmposition an der Trägerschiene (1) beaufschlagt.

3. Befestigungssystem nach einem der vorhergehenden Ansprüche, **gekennzeichnet durch** einen oder zwei offene elektrische Leiter (8), die sich jeweils an einer vom Befestigungskopf (55) abgewandten Seite der Rippen (2; 3) entlang der Trägerschiene (1) erstrecken.

4. Befestigungssystem nach Anspruch 3, **dadurch gekennzeichnet, dass** der wenigstens eine elektrische Leiter (8) durch eine elastische Schicht (6) von der Trägerschiene (1) beabstandet ist.

5. Befestigungssystem nach Anspruch 4, **dadurch gekennzeichnet, dass** es sich bei der elastischen Schicht (6) um ein Elastomer, vorzugsweise um Weichgummi oder Moosgummi, handelt.

6. Befestigungssystem (1) nach einem der Ansprüche 4 oder 5, **gekennzeichnet durch** eine starre Stützschicht (7) zwischen dem Leiter (8) und der elastischen Schicht (6).

7. Befestigungssystem nach einem der Ansprüche 3 bis 6, **dadurch gekennzeichnet, dass** die Halteklauen (47; 48) zur Abnahme eines Stromes von den Leitern (8) gegenüber dem Befestigungskopf (55) isolierte Kontakte haben.

8. Befestigungssystem nach einem der Ansprüche 3 bis 7, **dadurch gekennzeichnet, dass** ein Kontakt zum Berühren des wenigstens ersten Leiters (8) aus einer Kontur der Halteklauen (47; 48) hervorsteht.

9. Befestigungssystem nach einem der Ansprüche 3 bis 8, **gekennzeichnet durch** Mittel zum Schließen eines Stromkreises erst nach erfolgter Befestigung des Befestigungskopfes (55) an der Trägerschiene (1).

## Claims

1. System for mounting an accessory (11) in a motor vehicle mounted with a support rail and which has a mounting head (55) connected with the accessory (11); wherein the support rail (1) supports two ribs (2, 3) which go in opposite directions and the mounting head (55) comprises two retaining claws (47; 48) which encompass the ribs, **characterized in that** the two retaining claws (47; 48) can be pushed against one another by means of the mounting head's (55) leading rail and that a clamp (49) is linked on one side to the first retaining claw (47) and on the other side to the second retaining claw (48) via a knee lever (50).

2. Mounting system according to claim 1, **characterized by** an initial spring (49) which impinges the retaining claws (47, 48) in a clamping position on the support rail (1).

3. Mounting system according to one of the previous claims **characterized by** one or two open electrical conductors (8) which each stretch along the support rail on the side of the ribs (2, 3) which faces away from the mounting head (55).

4. Mounting system according to claim 3, **characterized in that** at least one of the electrical conductors (8) is spaced away from the support rail (1) by a layer of elastic (6).

5. Mounting system according to claim 4, **characterized in that** the layer of elastic (6) is an elastomer, preferably soft rubber or foamed rubber.

6. Mounting system (1) according to claim 4 or 5 **characterized by** a rigid support layer (7) between the conductor (8) and the layer of elastic (6).

7. Mounting system according to one of the claims 3 through 6, **characterized in that** the retaining claws (47; 48), in order to receive an electrical current from the conductors (8), have isolated contacts across from the mounting head.

8. Mounting system according to one of the claims 3 through 7, **characterized in that** a contact for touching at least the first conductor (8) protrudes from a contour of the retaining claws (47; 48).

9. Mounting system according to one of the claims 3 through 8, **characterized by** means to close an electricity circuit only after the mounting of the mounting head (55) to the support rail (1).

## Revendications

1. Système de fixation pour la fixation d'une partie accessoire (11) dans un véhicule, comprenant un rail support (1) monté sur le véhicule et une tête de fixation (55) reliée à la partie accessoire (11), le rail support (1) portant des nervures (2 ; 3) dépassant dans deux directions opposées et la tête de fixation (55) présentant deux griffes de retenue (47 ; 48) entourant les nervures, **caractérisé en ce que** les deux griffes de retenue (47 ; 48) sont mutuellement mobiles au moyen d'un rail de guidage de la tête de fixation (55) et **en ce qu'**un étrier de tension (49) est articulé, d'une part, sur la première griffe de retenue (47) et, d'autre part, au moyen d'un levier coudé (50) sur la seconde griffe de retenue (48).

2. Système de fixation selon la revendication 1, **caractérisé par** un premier ressort (49), qui sollicite les griffes de retenue (47, 48) dans une position de serrage sur le rail support (1).

3. Système de fixation selon l'une quelconque des revendications précédentes, **caractérisé par** un ou deux conducteurs (8) électriques ouverts, qui s'étendent respectivement sur un côté, opposé à la tête de fixation (55), des nervures (2 ; 3) le long du rail support (1).

4. Système de fixation selon la revendication 3, **caractérisé en ce que** le au moins un conducteur (8) électrique est espacé du rail support (1) par une couche (6) élastique.

5. Système de fixation selon la revendication 4, **caractérisé en ce que,** en ce qui concerne la couche (6) élastique, il s'agit d'un élastomère, de préférence de caoutchouc souple ou de caoutchouc mousse.

6. Système de fixation (1) selon l'une quelconque des revendications 4 ou 5, **caractérisé par** une couche de soutien (7) rigide entre le conducteur (8) et la couche (6) élastique.

7. Système de fixation selon l'une quelconque des revendications 3 à 6, **caractérisé en ce que** les griffes de retenue (47 ; 48) ont des contacts isolés par rapport à la tête de fixation (55) pour le prélèvement d'un courant sur les conducteurs (8).

8. Système de fixation selon l'une quelconque des revendications 3 à 7, **caractérisé en ce qu'**un contact, destiné au contact avec le au moins premier conducteur (8), dépasse d'un contour des griffes de retenue (47 ; 48).

9. Système de fixation selon l'une quelconque des revendications 3 à 8, **caractérisé par** des moyens destinés à fermer un circuit électrique uniquement après la fixation de la tête de fixation (55) sur le rail support (1).
